# EUROPÄISCHE PATENTSCHRIFT

(11) **EP 2 657 554 B1**
(45) Veröffentlichungstag und Bekanntmachung des Hinweises auf die Patenterteilung: **06.01.2016**
(21) Anmeldenummer: 13158681.0
(22) Anmeldetag: 12.03.2013
(51) Int. Cl.: F16C 19/52, F16C 23/08

(54) **Loslageranordnung**
Movable bearing assembly
Agencement de paliers libres

(30) Priorität: 26.04.2012 DE 102012206895
(43) Veröffentlichungstag der Anmeldung: 30.10.2013
(73) Patentinhaber: Schaeffler Technologies AG & Co. KG, 91074 Herzogenaurach (DE)
(72) Erfinder: Schulz, Waldemar, 97422 Schweinfurt (DE); Grehn, Martin, 97456 Dittelbrunn (DE)

(56) Entgegenhaltungen:
- DE-A1- 4 228 988
- US-A1- 2007 014 498

## Beschreibung

### Gebiet der Erfindung

Die Erfindung bezieht sich auf eine Loslageranordnung, insbesondere auf eine solche, bei der der Schmierstoff, mit welchem das Wälzlager geschmiert wird, einer temporären oder ständigen Überwachung unterliegt.

Loslager, welche in aller Regel immer mit einem Festlager zusammen eingesetzt werden, sind etwa aus "Die Wälzlagerpraxis", 2. Auflage, 1978, Seite 243 ff bekannt.

Die dort gezeigten, eine Los-/Festlagerkombination ausmachenden Wälzlager umfassen jeweils einen Innenring, einen Außenring, welcher den Innenring koaxial umgibt, wobei zwischen den Ringen Wälzkörper abrollen.

Auch wenn im Zusammenhang mit dieser Anmeldung nicht besonders darauf eingegangen wird, können die Wälzkörper selbstverständlich auch käfiggeführt sein.

Diese Wälzlager sind mit ihrem Außenring in einer Bohrung einer Anschlußkonstruktion angeordnet.

Der Axialausgleich des Loslagers einer Los-/Festlagerkombination wird entweder über die Sitzstelle des Außenrings des Loslagers, die Sitzstelle des Innenrings des Loslagers oder im Wälzlager des Loslagers selbst realisiert.

Im Folgenden soll nun ein Axialausgleich eines Loslagers exemplarisch für einen Außenring dieses Loslagers erläutert werden. Dazu ist der Au-ßenring axial verschiebbar in der Bohrung der Anschlußkonstruktion angeordnet, während der Innenring auf einer Welle drehfest und axial verschiebefest festgelegt ist. Der Innen- und der Außenring dieses Loslagers ist mit Rillen versehen, in denen Kugeln eines Rillenkugellagers abrollen. Da sich die so gelagerte Welle während ihres Betriebs stärker erwärmt als die Anschlußkonstruktion, hat diese thermische Gegebenheit zur Folge, dass wegen der vollständigen Festlegung der Welle an der Festlagerseite der Außenring des Loslagers seine ursprüngliche Sitzstelle in der Bohrung in der Anschlußkonstruktion verlässt. Die Veränderung wird im Wesentlichen dadurch hervorgerufen, dass die durch die stärkere thermische Ausdehnung der Welle hervorgerufene Axialkraft von der Rille im Innenring des Loslagers über die Kugeln auf die Rille im Außenring und damit auf den Außenring selbst übertragen wird, was letztlich zu einer axialen Relativbewegung des Außenrings in der Bohrung führt, in welche das Wälzlager bzw. das Loslager eingesetzt ist.

Eine andere Methode ein Loslager zu realisieren besteht darin, die Wälzkörper von einem mit Borden versehenen Lagerring zu führen und den anderen Lagerring bordlos zu halten. Kommt es bei dieser Ausbildung des Loslagers etwa zu einer thermischen Ausdehnung der gelagerten Welle, können die Wälzköper in axialer Richtung auf dem bordfreien Lagerring entlanggleiten und die durch die thermischen Gegebenheiten hervorgerufene Längenveränderung kompensieren, ohne dass die Radialwirkung des Loslagers beeinträchtigt wird.

Um das Abrollen der Wälzkörper auf den Laufbahnen zu verbessern, ist es bekannt, Wälzlager mit entsprechenden Fetten oder Ölen zu schmieren. Da diese Schmierstoffe aber nur eine begrenzte Haltbarkeit haben, ist es notwendig, die Schmierstoffe auf ihre Eignung zu analysieren. Auch kann die Analyse des Schmierstoffs wichtige Aufschlüsse über den Zustand des Lagers geben.

Eine gattungsbildende Loslageranordnung ist aus der DE 42 28 988 bekannt.

Sensoren, welche beispielsweise die Drehzahl des Wälzlagers oder das Vorhandensein von Schmierstoff in Wälzlager detektieren, sind allgemein in der Wälzlagertechnik üblich und ebenfalls aus der DE 42 28 988 bekannt. Dabei stehen die Sensoren etwa dem Lagerring gegenüber, dessen Drehzahl ermittelt werden soll, bzw. sind in den Schmierstoffstrom integriert. Die Daten, wie von den jeweiligen Sensoren aufgenommen werden, werden mittels von Signalkabeln, die beispielsweise durch einen parallel zur Rotationsachse verlaufenen und der Anschlusskonstruktion untergebrachten Kanal zu einer Auswerteelektronik übertragen. Wie die US 2007/0014498 darüber hinaus zeigt. kann der jeweilige Sensor auch direkt gegenüber dem zu detektierenden Wälzlager dem Kanal angeordnet sein. In diesem Fall entfallen besondere Maßnahmen, um den jeweiligen Sensor innerhalb des Wälzlagerraumen nahe dem Wälzlager ortsfest festzulegen.

Sensoren, welche im Zusammenhang mit dieser Anmeldung als Fettsensoren bezeichnet sind, sind etwa aus DE10 2004 016 955 bekannt. Dabei handelt es im Wesentlichen um rohrförmige Anordnungen, an deren einem Ende die mit dem Schmierstoff in Kontakt kommende Sensorfläche angebracht ist. Diese Sensorfläche steht mit einer Auswerteelektronik im Datenaustausch, um die ermittelten Schierstoffzustände aufzubereiten, zu speichern oder sichtbar zu machen.

Werden derartige Fettsensoren im Zusammenhang mit Wälzlagern verwendet, hat sich herausgestellt, dass derartige Fettsensoren lediglich bei Festlagern verlässliche und reproduzierbare Ergebnisse über den Schmierstoff bzw. den Schmierstand des Wälzlagers bereitstellen können.

### Aufgabe der Erfindung

Daher liegt der Erfindung die Aufgabe zugrunde, eine Loslageranordnung anzugeben, welche auch bei Loslagern eine zuverlässige Analyse des Schmierstoffs bzw. Schmierung erlaubt.

### Zusammenfassung der Erfindung

Diese Aufgabe wird mit den Merkmalen von Anspruch 1 gelöst. Vorteilhafte Aus- und Weiterbildungen der Erfindung sind den Ansprüchen 2 bis 6 entnehmbar.

Ist gemäß Anspruch 1 die Anschlusskonstruktion mit einem Kanal versehen, der im Wesentlichen parallel zur Rotationsachse des Lagers verläuft, und ist in den Kanal eine Lanze eingesetzt, die in diesem axial verschiebbar ist, und deren dem Wälzlager nahes Ende, welches mit einem Fettsensor versehen ist, mit einer der Stirnflächen des Außenrings, des Innenrings oder den Wälzkörpern in körperlichem Kontakt steht und deren anderes Ende aus der Anschlusskonstruktion herausgeführt ist, wird eine Anordnung geschaffen, bei der trotz einer axialen Längung der Welle gegenüber der Anschlußkonstruktion der axiale Abstand des Fettsensors zu dem die Loslagerlagerfunktion übernehmenden Wälzlager unverändert bleibt. Maßgeblich ist hierfür der körperliche Kontakt der Lanze mit der Stirnfläche der Komponente des Wälzlagers, für welche entsprechend der Auslegung des jeweiligen Loslagers eine axiale Bewegung zugelassen wird.

Wenn im Zusammenhang mit dieser Anmeldung von Komponenten des Wälzlagers die Rede ist, werden von diesem Begriff nicht nur die beiden Lagerringe und die Wälzkörper umfasst, sondern auch Käfige, welche zur Führung der Wälzkörper dienen.

Steht gemäß Anspruch 2 das dem Fettsensor ferne Ende der Lanze mit einer Feder in Wirkverbindung, welche das dem Wälzlager nahe Ende der Lanze gegen eine Stirnfläche des Außenrings, Innenrings oder der Wälzkörper drückt, wird sichergestellt, dass die Lanze immer in körperlichem Kontakt zu den jeweiligen Komponenten des Wälzlagers steht. Dies ist insbesondere dann vorteilhaft, wenn sich nach einer Vergrößerung des axialen Abstands zwischen Los- und Festlager diese Vergrößerung wieder zurückstellt, weil dann die durch die bei der Vergrößerung bzw. Längung gespeicherte und/oder ohnehin schon vorhandene Federkraft dafür sorgt, dass die Lanze auch bei Verringerung des axialen Abstands dem -sich aus Sicht der Lanze zurückziehenden- Loslager folgt.

Ist gemäß Anspruch 3 das dem Wälzlager nahe Ende der Lanze mit einem Anlagefuß versehen ist, der gegenüber der Längsachse der Lanze um 90° abklappbar ist, lassen sich verschiedenste Vorteile realisieren. Zum einen kann durch den Anlagefuß sichergestellt werden, dass eine ausreichend große Anlagefläche zwischen den jeweiligen Wälzlagerkomponenten, mit denen die Lanze in körperlichen Kontakt treten soll, bereitgestellt wird, ohne dass der Kanal für diese Zwecke unnötig groß ausgebildet werden muss. Dies ist darauf zurückzuführen, dass der Anlagefuß, wenn er bzw. die Lanze durch den Kanal in der Anschlußkonstruktion geführt wird, im Wesentlichen dem Durchmesser der Lanze entspricht und erst dann, wenn die Lanze fast ihre Endlage in der Anschlusskonstruktion eingenommen hat, infolge der Schwerkraft oder durch den körperlichen Kontakt mit der jeweiligen Wälzlagerkomponente gegenüber der Erstreckungsrichtung der Lanze abklappt.

Zum weiteren kann der abklappbare Anlagefuß auch dazu eingesetzt werden, um den radialen Abstand des Fettsensors zur Lagerachse weitgehend frei zu wählen. Ist beispielsweise nach der Auslegung des Loslagers vorgesehen, dass bei dieser Los- / Festlagerkombination der Au-βenring des Loslagers in der Anschlußkonstruktion einer axialen Abstandsveränderung folgen soll, würde nach dem bisher gesagten die Lanze mit der Stirnfläche des Außenrings in körperlichem Kontakt stehen. Da der Fettsensor aber in der Lanze angeordnet ist, würde damit auch der Fettsensor direkt der Stirnfläche des Außenrings gegenüberstehen. Eine solche Position des Fettsensors kann aber ungünstig sein, weil beispielsweise nur eine für die Messung ausreichend große Schmierstoffmenge im radialen Abstand zwischen den beiden Lagerringen zur Verfügung steht. Wird daher die Lanze mit einem abklappbaren Anlagefuß versehen, kann der Fettsensor beispielsweise direkt gegenüber den Wälzkörpern platziert werden, obwohl das dem Wälzlager nahe Ende der Lanze nicht an den Wälzkörpern, sondern am Außenring anliegt.

Gute Messergebnisse, hervorgerufen durch einen innigen Kontakt zwischen Schmierstoff und Fettsensor, werden dann erzielt, wenn gemäß Anspruch 4 die Lanze mit wenigstens einer Öffnung versehen ist und der Fettsensor in dem von der oder den Öffnungen bereit gestellten Bereich hineinragt oder zumindest nahe dem Rand solcher Öffnungen angeordnet ist. Besonders vorteilhaft in es in diesem Zusammenhang, wenn die Öffnungen so angeordnet sind, dass der durch die Öffnungen ins Innere der Lanze eintretende Schmierstoffstrom den Fettsensor umspült.

Eine für eine Vielzahl von Anwendungen einsetzbare Anordnung ist gemäß Anspruch 5 dann geschaffen, wenn ein Gehäuse vorgesehen ist, welches mit der Anschlusskonstruktion verbunden ist, die Lanze in dem Gehäuse axial verschiebbar gelagert ist, dass das im Gehäuse endende Ende der Lanze mit einem Kragen versehen ist und die Feder zwischen dem Kragen und einer der Innenwandungen des Gehäuses eingespannt ist.

Ist gemäß Anspruch 6 das Gehäuse mit einem Rohr versehen, in welchem die Lanze axial verschiebbar geführt ist, und das Rohr in den Kanal geschraubt, ist nicht nur ein besonderer Schutz der Lanze realisiert, sondern das Gehäuse kann auch sehr einfach mit der Anschlußkonstruktion verbunden bzw. von dieser wieder gelöst werden.

### Kurze Beschreibung der Zeichnung

Es zeigen:
- Fig. 1: eine Loslageranordnung;
- Fig. 2: eine Lanze; und
- Fig. 3: eine weitere Lanze.

### Detaillierte Beschreibung der Zeichnung

Die Erfindung soll nun anhand der Figuren näher beschrieben werden.

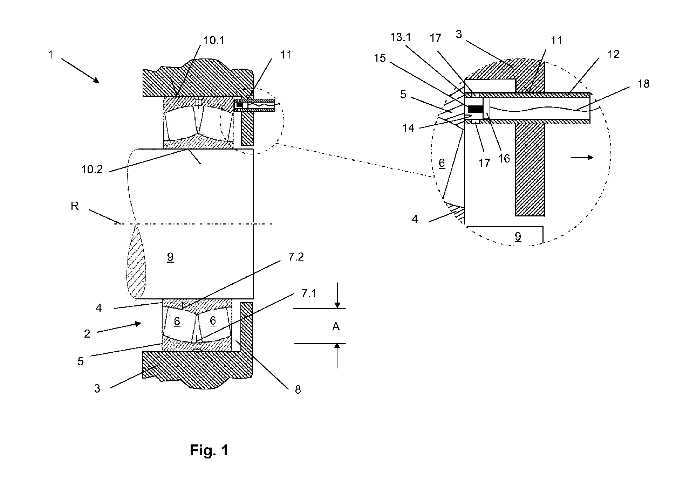

In Fig. 1 ist eine Loslageranordnung 1 in Seitenansicht gezeigt, welche im Wesentlichen ein Wälzlager 2 und eine Anschlußkonstruktion 3 umfasst. Das Wälzlager 2 wird von einem Innenring 4, einem den Innenring 4 koaxial mit radialem Abstand A umgebenden Außenring 5 und Wälzkörpern 6 gebildet, wobei die Wälzkörper 6 im radialen Abstand A zwischen den Ringen 4, 5 angeordnet sind und im Betrieb des Wälzlagers 2 auf den Laufbahnen 7.1, 7.2 der Ringe 4, 5 abrollen.

Nur der Vollständigkeit sei darauf hingewiesen, dass das in Fig. 1 gezeigte Wälzlager 2 als Pendelrollenlager ausgebildet ist und die für Pendelrollenlager typische hohlkugelförmig ausgebildete Laufbahn 7.1 des Außenrings 5 und die in zwei Reihen angeordneten Wälzköper 6 aufweist. Durch die Darstellung in Fig. 1 ist aber keine Beschränkung der Erfindung auf Pendelrollenlager verbunden. Vielmehr kann in einem anderen -nicht dargestellten- Ausführungsbeispiel das Wälzlager 2 auch als Kugellager oder Zylinderrollenlager ausgebildet sein.

Der Außenring 5 des Wälzlagers 2 gemäß Fig. 1 ist in eine in der Anschlußkonstruktion 3 belassene Bohrung 8 eingesetzt. Der Innenring 4 wird von einer Welle 9 durchzogen, mit der der Innenring 4 auch gleichzeitig dreh- und verschiebefest verbunden ist.

Der für Loslager typische Axialausgleich zwischen Welle 9 und Anschlußkonstruktion 3 wird in der Darstellung gemäß Fig. 1 dadurch realisiert, dass die Sitzfläche 10.1 des Außenrings 5 in der Bohrung 8 in axialer Richtung gleiten kann, wenn etwa auf Grund von Temperaturunterschieden zwischen Welle 9 und Anschlusskonstruktion 3 die Welle 9 gegenüber der Anschlußkonstruktion 3 eine stärkere axiale Ausdehnung erfährt.

Ferner ist in Fig. 1 ein Kanal 11 gezeigt, welcher in der Anschlußkonstruktion 3 angeordnet ist und welcher im Wesentlichen parallel zur Rotationsachse R verläuft.

In diesen Kanal 11 ist -wie insbesondere die Detailvergrößerung zeigteine Lanze 12 in den Kanal 11 eingesetzt. Dabei ist die Lanze 12 so weit in den Kanal 11 eingeschoben, dass deren den Wälzlager 2 nahes Ende 13.1 mit der Stirnfläche 14 des Außenrings 5 in körperlichem Kontakt steht.

In der Lanze 12 ist ein Fettsensor 15 angeordnet und mittels einer Halterung 16 mit der Lanze 12 ortsfest verbunden. Ferner sind in der Lanze 12 noch Öffnungen 17 vorgesehen, über welche der Fettsensor 15 mit dem Schmiermittel (nicht gezeigt) des Wälzlagers 2 in Kontakt steht. Über die Anschlussleitung 18 steht der Fettsensor 15 mit einer nicht gezeigten Auswerteelektronik im Austausch.

Erwärmt sich die Welle 9 im Vergleich zur Anschlußkonstruktion 3 stärker, wird die sich aus dem Temperaturunterschied ergebende größere axiale Längung der Welle 9 dadurch ausgeglichen, dass die axiale Längung der Welle 9 vom Innenring 4, über die Wälzkörper 6 auf den Außenring 5 übertragen wird, was dann zu einem Gleiten des Außenrings 5 auf der Sitzfläche 10.1 der Bohrung 8 in Richtung der axialen Längung der Welle 9 führt.

Gleichzeitig mit dem Gleiten des Außenrings 5 in der Bohrung 8 der Anschlusskonstruktion wird diese axiale Bewegung des Außenrings 5 auf die Lanze 12 übertragen, da deren dem Wälzlager 2 nahes Ende 13.1 mit der Stirnfläche 14 des Außenrings 5 in körperlichem Kontakt steht. Dadurch, dass die Bewegungen des Außenrings 5 und der Lanze 12 in axialer Richtung zumindest für eine Auswärtsbewegung (angedeutet durch den Pfeil P) synchron erfolgt, wird sichergestellt, dass der in Lanze 12 ortsfest angebrachte Fettsensor 15 zu jedem Zeitpunkt dieser Auswärtsbewegung immer den gleichen axialen Abstand zum Wälzlager 2 bzw. zum Außenring 5 einhält.

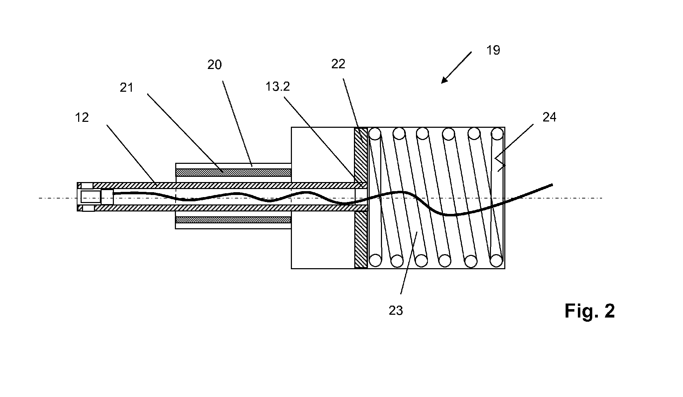

Da nicht ausgeschlossen werden kann, dass die eben beschriebene Auswärtsbewegung sich auch wieder zurückstellen kann, weil die Welle 9 und die Anschlußkonstruktion 3 etwa durch Stillstandszeiten wieder auf gleiches Temperaturniveau zurückfallen, wird in Fig. 2 eine Lanze 12 gezeigt, die auch bei einer Bewegung des Außenrings 5 entgegen der Pfeilrichtung P gemäß der Detailzeichnung von Fig. 1 sicherstellt, dass das dem Wälzlager 2 nahe Ende 13 der Lanze 12 immer mit der Stirnfläche 14 des Außenrings 5 in körperlichem Kontakt bleibt und somit unabhängig von einer Längung oder Kürzung der Welle 9 gegenüber der Anschlußkonstruktion 3 für einen immer gleichen Abstand des Fettsensors 15 zum Wälzlager 2 bzw. dessen Komponenten sorgt.

Zur Realisierung dieser Funktion ist in Fig. 2 ein Gehäuse 19 gezeigt, welches mit einem ein Außengewinde 20 aufweisenden Rohr 21 umfasst. In dem Rohr 21 ist die Lanze 12 axial verschiebbar gelagert. Das dem Wälzlager 2 (in Fig. 2 nicht gezeigt) ferne Ende 13.2 ist bis in das Innere des Gehäuses 19 geführt und mit einem Kragen 22 versehen. Auf diesen Kragen 22 wirkt eine Feder 23, die sich an der Innenwandung 24 des Gehäuses 19 abstützt.

Wird das Rohr 21 mit dem Außengewinde 20 in einen mit einem Innengewinde versehenen Kanal 11 eingeschraubt, wird eine lösbare Verbindung zwischen dem Gehäuse 19 und der Anschlußkonstruktion 3 hergestellt, welche der Detaildarstellung gemäß Fig. 1 ähnlich ist, aber in Fig. 2 nicht gezeigt ist. Kommt es nun zu einer im Zusammenhang mit Fig. 1 schon erläuterten Relativbewegung als Folge einer Längung der Welle 9 gegenüber der Anschlußkonstruktion 3, wird durch diese Bewegung die Feder 23 zusammengedrückt. Stellt sich diese im Zusammenhang mit Fig. 1 als Auswärtsbewegung bezeichnete Lageveränderung des Außenrings 5 in der Anschlusskonstruktion 3 später wieder zurück, folgt die Lanze 12 dank der in der zusammengedrückten Feder 23 gespeicherten Energie der der Auswärtsbewegung entgegengesetzten Bewegung. Damit ist sichergestellt, dass in jedem Betriebszustand immer ein körperlicher Kontakt zwischen Lanze 12 und Wälzlager 2 gegeben ist und der axiale Abstand des Fettsensors 15 zum Wälzlager 2 bzw. dessen Komponenten immer gleich bleibt.

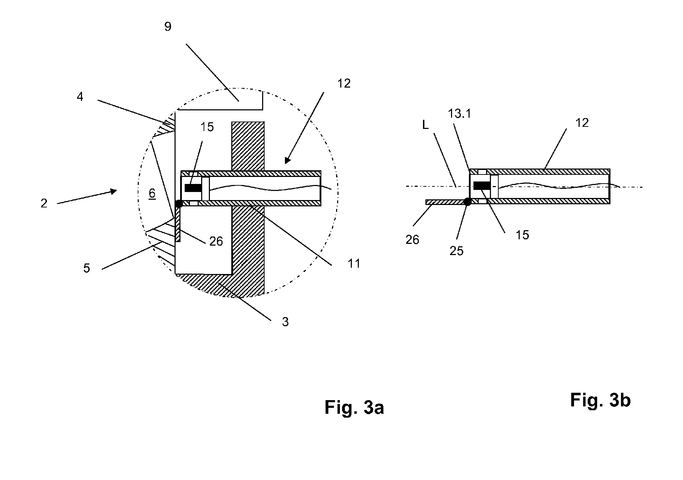

In Fig. 3a ist eine Detaildarstellung gezeigt, die im Wesentlichen der Detaildarstellung gemäß Fig. 1 entspricht.

In Fig. 3b ist eine Lanze 12 gemäß Fig. 3a gezeigt. Diese Lanze 12 ist ebenso wie die Lanze 12 gemäß Fig. 1 rohrförmig ausgebildet und nimmt in ihrem Inneren den Fettsensor 15 auf. Das dem Wälzlager 2 nahe Ende 13.1 der Lanze 12 ist über ein Scharnier 25 mit einem Anlagefluss 26 verbunden. Wie noch zu erläutern sein wird, kann der Anlagefuß 26 gegenüber der Längsachse L der Lanze 12 um 90° abgewinkelt werden.

Wird die in Fig. 3b gezeigte Lanze 12 in einen Kanal 11 einer Anschlußkonstruktion 3 eingeschoben, durchdringen der Anlagefuß 26 und die Lanze 12 problemlos den Kanal 11. Tritt dann bei fortschreitender Einschubbewegung der Anlagefuß 26 vollständig aus dem Kanal 11 heraus, klappt dann der Anlagefuß 25 infolge der wirkenden Schwerkraft um 90° gegenüber der Längsachse L der Lanze 12 ab. Diese Verhältnisse sind in Fig. 3a gezeigt.

Mit weiter fortschreitender Einschubbewegung kommt dann der Anlagefuß 26 mit dem Außenring 5 des Wälzlagers 2 in körperlichen Kontakt. In diesem Zusammenhang sei darauf hingewiesen, dass das vollständige Abklappen des Anlagefußes 26 um 90° nicht allein durch die Wirkung der Schwerkraft bewirkt werden muss, sondern auch erst durch den körperlichen Kontakt des Anlagefußes 26 an den jeweiligen Komponenten des Wälzlagers 2 vervollständigt werden kann.

Deutlich ist der Darstellung gemäß Fig. 3a entnehmbar, dass gegenüber der Ausführung gemäß Fig. 1 durch die Wirkung des abgeklappten Anlagefußes 26 der Fettsensor 15 nicht direkt gegenüber dem Außenring 5, sondern direkt gegenüber den Wälzkörpern 6 angeordnet ist, ohne dass das dem Wälzlager 2 nahe Ende 13.1 der Lanze 12 selbst mit den Wälzkörpern 6 in körperlichen Kontakt tritt bzw. treten muss. Durch diesen über den abklappbaren Anlagefuß 26 geschaffenen Freiheitsgrad wird sichergestellt, dass der Fettsensor 15 an dem Ort platziert werden kann, an welchem Schmierstoff (nicht gezeigt) in ausreichender Menge zur Verfügung steht, ohne dass dabei Rücksicht auf den durch den Axialausgleich erforderlichen Antrieb der Lanze 12 genommen werden muss.

Nur der Vollständigkeit halber sei darauf hingewiesen, dass in den Figuren 3a und 3b auf die Darstellung einer federbelasteten Lanze 12 verzichtet wurde, welche die Lanze 12 bzw. den Anlagefuß 26 immer in körperlichem Kontakt zum Wälzlager 2 bzw. deren Komponenten hält. Natürlich kann in einem anderen -nicht dargestellten- Ausführungsbeispiel die in Fig. 3b gezeigte Lanze 12 als solche auch im Zusammenhang mit einer Anordnung gemäß Fig. 2 verwendet werden.

Auch wenn in allen Ausführungsbeispielen davon ausgegangen worden ist, dass der Außenring 5 bei einer Längung der Welle 9 axial in der Bohrung 8 der Anschlußkonstruktion 3 verschoben und die Lanze 12 vom Außenring 5 "angetrieben" wird, kann die Lanze 12 in einem anderen -nicht gezeigten- Ausführungsbeispiel auch ebenso gut mit dem Innenring 4 in körperlichem Kontakt stehen, wenn der Axialausgleich dadurch realisiert werden soll, dass unter Längung der Welle 9 der Innenring 4 seine relative Position zu den Wälzkörpern 6 verändert.

### Bezugszeichenliste

- 1: Loslageranordnung
- 2: Wälzlager
- 3: Anschlusskonstruktion
- 4: Innenring
- 5: Außenring
- 6: Wälzkörper
- 7: Laufbahn
- 8: Bohrung
- 9: Welle
- 10: Sitzfläche
- 11: Kanal
- 12: Lanze
- 13: Ende
- 14: Stirnfläche
- 15: Fettsensor
- 16: Halterung
- 17: Öffnung
- 18: Anschlußleitung
- 19: Gehäuse
- 20: Außengewinde
- 21: Rohr
- 22: Kragen
- 23: Feder
- 24: Innenwandung
- 25: Scharnier
- 26: Anlagefuß

## Patentansprüche

1. Loslageranordnung
mit einem Wälzlager (2), welches einen Innenring (4), einen den Innenring (4) koaxial umgebenden Außenring (5) und Wälzkörper (6) umfasst, wobei die Wälzkörper (6) zwischen den Ringen (4, 5) abrollen,
mit einer eine Bohrung (8) umfassenden Anschlußkonstruktion (3), in welche das Wälzlager (2) eingesetzt ist,
mit einem entweder an der Sitzfläche (10.1) des Außenrings (5), der Sitzfläche (10.2) des Innenrings (4) oder im Wälzlager (2) selbst vorgesehenen Axialausgleich, und
mit einem in der Anschlusskonstruktion (3) versehenen Kanal (11), der im Wesentlichen parallel zur Rotationsachse R des Wälzlagers (2) verläuft,
**dadurch gekennzeichnet,**
**dass** in den Kanal (11) eine Lanze (12) eingesetzt ist, die in diesem axial verschiebbar ist, wobei das dem Wälzlager (2) nahe Ende (13.1) der Lanze (12), welches mit einem Fettsensor (15) versehen ist, mit einer der Stirnflächen (14) des Außenrings (5), des Innenrings (4) oder der Wälzkörper (6) in körperlichem Kontakt steht und dessen anderes Ende (13.2) aus der Anschlußkonstruktion (3) herausgeführt ist.

2. Loslageranordnung nach Anspruch 1
**dadurch gekennzeichnet,**
**dass** das dem Fettsensor (15) ferne Ende (13.2) der Lanze (12) mit einer Feder (23) in Wirkverbindung steht, welche das dem Wälzlager (2) nahe Ende (13.1) der Lanze (12) gegen eine der Stirnflächen (14) des Außenrings (5), des Innenrings (4) oder der Wälzkörper (6) drückt.

3. Loslageranordnung nach Anspruch 1 oder Anspruch 2
**dadurch gekennzeichnet,**
**dass** das dem Wälzlager (2) nahe Ende (13.1) der Lanze (12) mit einem Anlagefuß (26) versehen ist, der gegenüber der Längsachse L der Lanze (12) um 90° abklappbar ist.

4. Loslageranordnung nach einem der Ansprüche 1 bis 3
**dadurch gekennzeichnet,**
**dass** die Lanze (12) mit wenigstens einer Öffnung (17) versehen ist und
**dass** der Fettsensor (15) in dem von der oder den Öffnungen (17) bereit gestellten Bereich hineinragt oder zumindest nahe dem Rand solcher Öffnungen (17) angeordnet ist.

5. Loslageranordnung nach einem der Ansprüche 2 bis 4
**dadurch gekennzeichnet,**
**dass** ein Gehäuse (19) vorgesehen ist, welches mit der Anschlusskonstruktion (3) verbunden ist,
**dass** die Lanze (12) in dem Gehäuse (19) axial verschiebbar gelagert ist,
**dass** das im Gehäuse (19) endende Ende (13.2) der Lanze (12) mit einem Kragen (22) versehen ist und
**dass** zwischen dem Kragen (22) und einer der Innenwandungen (24) des Gehäuses (19) die Feder (23) eingespannt ist.

6. Loslageranordnung nach Anspruch 5
**dadurch gekennzeichnet,**
**dass** das Gehäuse (19) mit einem Rohr (21) versehen ist, in welchem die Lanze (12) axial verschiebbar geführt ist, und
**dass** das Rohr (21) in den Kanal (11) eingeschraubt ist.

## Claims

1. Floating bearing arrangement having an anti-friction bearing (2) which comprises an inner ring (4), an outer ring (5) which surrounds the inner ring (4) coaxially, and rolling bodies (6), the rolling bodies (6) rolling between the rings (4, 5), having an adjacent construction (3) which comprises a bore (8) and into which the anti-friction bearing (2) is inserted, having an axial compensation means which is provided either on the seat face (10.1) of the outer ring (5), the seat face (10.2) of the inner ring (4) or in the anti-friction bearing (2) itself, and having a channel (11) which is provided in the adjacent construction (3) and runs substantially parallel to the rotational axis R of the anti-friction bearing (2), **characterized in that** a lance (12) is inserted into the channel (11), which lance (12) can be displaced axially in the said channel (11), that end (13.1) of the lance (12) which is close to the anti-friction bearing (2) and is provided with a grease sensor (15) being in physical contact with one of the end faces (14) of the outer ring (5), the inner ring (4) or the rolling bodies (6), and the other end (13.2) of which is guided out of the adjacent construction (3).

2. Floating bearing arrangement according to Claim 1, **characterized in that** that end (13.2) of the lance (12) which is remote from the grease sensor (15) is operatively connected to a spring (23) which presses that end (13.1) of the lance (12) which is close to the anti-friction bearing (2) against one of the end faces (14) of the outer ring (5), the inner ring (4) or the rolling bodies (6).

3. Floating bearing arrangement according to Claim 1 or Claim 2, **characterized in that** that end (13.1) of the lance (12) which is close to the anti-friction bearing (2) is provided with a contact base (26) which can be folded out by 90° with respect to the longitudinal axis L of the lance (12).

4. Floating bearing arrangement according to one of Claims 1 to 3, **characterized in that** the lance (12) is provided with at least one opening (17), and **in that** the grease sensor (15) protrudes into the region which is provided by the opening or openings (17), or is arranged at least close to the edge of openings (17) of this type.

5. Floating bearing arrangement according to one of Claims 2 to 4, **characterized in that** a housing (19) is provided which is connected to the adjacent construction (3), **in that** the lance (12) is mounted axially displaceably in the housing (19), **in that** that end (13.2) of the lance (12) which ends in the housing (19) is provided with a collar (22), and **in that** the spring (23) is clamped in between the collar (22) and one of the inner walls (24) of the housing (19).

6. Floating bearing arrangement according to Claim 5, **characterized in that** the housing (19) is provided with a tube (21), in which the lance (12) is guided axially displaceably, and **in that** the tube (21) is screwed into the channel (11).

## Revendications

1. Agencement de paliers libres, avec un palier à roulement (2), qui comprend une bague intérieure (4), une bague extérieure (5) entourant coaxialement la bague intérieure (4), et des corps de roulement (6), dans lequel les corps de roulement (6) roulent entre les bagues (4, 5),
avec une construction de raccordement (3) comprenant un alésage (8), dans lequel le palier à roulement (2) est introduit,
avec une compensation axiale prévue soit sur la face de siège (10.1) de la bague extérieure (5), soit sur la face de siège (10.2) de la bague intérieure (4), soit encore dans le palier à roulement (2) lui-même, et
avec un canal (11) prévu dans la construction de raccordement (3), qui s'étend essentiellement parallèlement à l'axe de rotation R du palier à roulement (2),
**caractérisé en ce qu'**une lance (12) est introduite dans le canal (11), où elle est déplaçable axialement, dans lequel l'extrémité (13.1) de la lance (12) proche du palier à roulement (2), qui est munie d'un détecteur de graisse (15), est en contact physique avec une des faces frontales (14) de la bague extérieure (5), de la bague intérieure (4) ou des corps de roulement (6) et son autre extrémité (13.2) est menée hors de la construction de raccordement (3).

2. Agencement de paliers libres selon la revendication 1, **caractérisé en ce que** l'extrémité (13.2) de la lance (12) éloignée du détecteur de graisse (15) est en relation active avec un ressort (23), qui presse l'extrémité (13.1) de la lance (12) proche du palier à roulement (2) contre une des faces frontales (14) de la bague extérieure (5), de la bague intérieure (4), ou des corps de roulement (6).

3. Agencement de paliers libres selon la revendication 1 ou la revendication 2, **caractérisé en ce que** l'extrémité (13.1) de la lance (12) proche du palier à roulement (2) est munie d'un pied d'appui (26), qui est rabattable de 90° par rapport à l'axe longitudinal L de la lance (12).

4. Agencement de paliers libres selon l'une quelconque des revendications 1 à 3, **caractérisé en ce que** la lance (12) est dotée d'au moins une ouverture (17), et **en ce que** le détecteur de graisse (15) pénètre dans la région formée par la ou les ouverture (s) (17) ou est disposé au moins à proximité du bord de ces ouvertures (17).

5. Agencement de paliers libres selon l'une quelconque des revendications 2 à 4, **caractérisé en ce qu'**il est prévu un boîtier (19), qui est relié à la construction de raccordement (3), **en ce que** la lance (12) est montée de façon déplaçable axialement dans le boîtier (19), **en ce que** l'extrémité (13.2) de la lance (12) se terminant dans le boîtier (19) est munie d'une collerette (22), et **en ce que** le ressort (23) est tendu entre la collerette (22) et une des parois intérieures (24) du boîtier (19).

6. Agencement de paliers libres selon la revendication 5, **caractérisé en ce que** le boîtier (19) est muni d'un tube (21), dans lequel la lance (12) est guidée de façon déplaçable axialement, et **en ce que** le tube (21) est vissé dans le canal (11).
